Europäisches Patentamt

European Patent Office

Office européen des brevets

(19)

(11) Veröffentlichungsnummer: **0 349 030**
**A1**

## (12) EUROPÄISCHE PATENTANMELDUNG

(21) Anmeldenummer: 89201524.9

(22) Anmeldetag: 13.06.89

(51) Int. Cl.4: **F23C 11/02 , B01J 8/44**

(30) Priorität: 25.06.88 DE 3821509

(43) Veröffentlichungstag der Anmeldung:
03.01.90 Patentblatt 90/01

(84) Benannte Vertragsstaaten:
AT BE DE ES FR GB IT NL SE

(71) Anmelder: METALLGESELLSCHAFT
AKTIENGESELLSCHAFT
Reuterweg 14 Postfach 10 15 01
D-6000 Frankfurt 1(DE)

(72) Erfinder: Hirsch, Martin
Römerstrasse 7
D-6382 Freidrichsdorf(DE)
Erfinder: Reimert, Rainer, Dr.
Unter der Hambach 15
D-6270 Idstein/Ts(DE)
Erfinder: Vydra, Karel, Dr.
Frankfurter Strasse 51
D-6350 Bad Nauheim(DE)

(54) **Wirbelschichtanlage.**

(57) Eine aus Wirbelschichtreaktor, Feststoffabscheider und Rückführleitung gebildete Wirbelschichtanlage zur Durchführung von exothermen Prozessen in der zirkulierenden Wirbelschicht mit Leitungen zur Zufuhr sauerstoffhaltiger Primärgase durch den Boden (6) des Wirbelschichtreaktors (1) und Leitungen (9, 11) zur Zufuhr sauerstoffhaltiger Sekundärgase in eine Höhe von mindestens 1 m über dem Reaktorboden (6), jedoch maximal 30 % der Reaktorhöhe, sowie einer zwischen Primär- und Sekundärgaszuführung in den Wirbelschichtreaktor mündenden Brennstoffleitung (3) besitzt zwecks einwandfreier Quervermischung von sauerstoffhaltigem Sekundärgas und Brennstoff, insbesondere bei Reaktoren mit großen Abmessungen, einen oder mehrere, 40 bis 75 % der Bodenfläche des Wirbelschichtreaktors (1) abdeckende(n) Verdrängungskörper (7). Dessen maximale Höhe ist gleich der halben Höhe des Wirbelschichtreaktors (1) und seine Anordnung derart, daß die verbleibende Bodenfläche (6) des Wirbelschichtreaktors (1) eine einzige zusammenhängende Fläche bildet.

Vorzugsweise weisen der oder die Verdrängungskörper (7) quadratischen oder rechteckigen Querschnitt und Einrichtungen (11) zum Eintrag von sauerstoffhaltigen Sekundärgasen und/oder Einrichtungen (3) zum Eintrag von Brennstoff auf.

Fig.2

EP 0 349 030 A1

## Wirbelschichtanlage

Die Erfindung betrifft eine aus Wirbelschichtreaktor, Feststoffabscheider und Rückführleitung gebildete Wirbelschichtanlage zur Durchführung von exothermen Prozessen in der zirkulierenden Wirbelschicht mit Leitungen zur Zufuhr sauerstoffhaltiger Primärgase durch den Boden des Wirbelschichtreaktors und Leitungen zur Zufuhr sauerstoffhaltiger Sekundärgase in einer Höhe von mindestens 1 m über dem Reaktorboden, jedoch maximal 30 % der Reaktorhöhe, sowie einer zwischen Primär- und Sekundärgaszuführung in den Wirbelschichtreaktor mündenden Brennstoffleitung, wobei durch einen oder mehrere Verdrängungskörper, dessen (deren) maximale Höhe gleich der halben Höhe des Wirbelschichtreaktors ist, 40 bis 75 % der Bodenfläche des Wirbelschichtreaktors abgedeckt sind.

Mit zirkulierenden Wirbelschichten arbeitende Verfahren und Vorrichtungen, insbesondere auch zur Verbrennung kohlenstoffhaltiger Materialien, haben sich als äußerst vorteilhaft erwiesen. Sie sind gegenüber solchen, die mit sogenannten klassischen oder konventionellen Wirbelschichten betrieben werden, aus vielerlei Gründen überlegen.

Speziell für Verbrennungsprozesse ist das Basisverfahren in der DE-AS 25 39 546 (entsprechend US-PS 4 165 717) beschrieben. Es sieht vor, die Verbrennung zweistufig vorzunehmen und die Verbrennungswärme mit Hilfe von Kühlflächen, die oberhalb der Sekundärgaszufuhr im Wirbelschichtreaktor angeordnet sind, abzuführen. Der besondere Vorzug des Verfahrens besteht darin, daß man den Verbrennungsprozeß in technisch einfacher Weise an den Leistungsbedarf anpassen kann, indem im oberen Reaktorraum die Suspensionsdichte und damit der Wärmeübergang auf die Kühlflächen geregelt wird.

Bei dem Verbrennungsprozeß mit zirkulierender Wirbelschicht gemäß DE-OS 26 24 302 (entsprechend US-PS 4 111 158) ist vorgesehen, die Verbrennungswärme zum Teil oder insgesamt in einem dem Wirbelschichtreaktor nachgeschalteten Wirbelschichtkühler zu entnehmen und gekühlten Feststoff zur Konstanthaltung der Temperatur in den Wirbelschichtreaktor zurückzuführen. Die Anpassung an den Leistungsbedarf erfolgt hierbei durch Vergrößerung oder Verringerung des über den Wirbelschichtkühler und danach wieder in den Wirbelschichtreaktor geführten Feststoffstromes.

Obgleich sich die vorstehend skizzierten Verfahren in hohem Maße bewährt haben, treten bei dem vorhandenen Trend zu Anlageneinheiten mit zunehmend größerer Wärmeleistung gewisse Schwierigkeiten in der Verfahrensführung auf. Sie bestehen im wesentlichen darin, daß größere Wärmeleistungen größere Reaktorabmessungen, insbesondere größere Reaktorquerschnitte, erfordern, bei denen die für die Umsetzung erforderliche einwandfreie Quervermischung von Brennstoff und dergl. bzw. sauerstoffhaltigem Sekundärgas über die gesamte Fläche des Wirbelschichtreaktors im Bereich des Aufgabeortes nicht mehr gewährleistet ist. Die Folge ist, daß sich die Umsetzung zu einem erheblichen Teil in den oberen Reaktorraum verlagert, gegebenenfalls eine Nachverbrennung nach Trennung von Feststoff und Gas im Feststoffabscheider eintritt. Die vorstehend geschilderte Situation tritt bei Anlagen mit Verbrennungsleistungen etwa oberhalb 300 MW (thermisch) und Bodenflächen des Wirbelschichtreaktors von etwa oberhalb 50 m² auf.

Einem älteren Vorschlag zufolge soll das Problem behoben werden, indem durch einen oder mehrere Verdrängungskörper, deren bzw. dessen maximale Höhe gleich der halben Höhe des Wirbelschichtreaktors ist, 40 bis 75 % der Bodenfläche des Wirbelschichtreaktors abgedeckt sind. Dabei kann die geometrische Gestalt des Verdrängungskörpers weitgehend beliebig sein. Beispielsweise kann er bei kreisförmigem Querschnitt des Wirbelschichtreaktors die Form eines Zylinders oder Kegelstumpfes besitzen, wobei der Mittelpunkt der unteren Kreisfläche etwa auf dem Mittelpunkt der Bodenfläche ruht. Bei rechteckigem Reaktorquerschnitt kann der Verdrängungskörper die Form eines Dammes besitzen, der gegebenenfalls an seinen Enden an die parallel verlaufenden Reaktorwände anschließt und so den unteren Reaktorraum in zwei getrennte Kammern teilt. Es sind auch zwei praktisch rechtwinklig zueinander verlaufende Dämme möglich, die - sofern sie an die Reaktorwände anschließen - den unteren Reaktorraum in vier separate Kammern aufteilen.

Wie sich gezeigt hat, können bei der vorgenannten Ausgestaltung der Wirbelschichtanlage dann Betriebsbeeinträchtigungen auftreten, wenn der Verdrängungskörper den unteren Reaktorraum in getrennte Kammern aufteilt. Dann kann es nämlich geschehen, daß Bettmaterial durch den Primärluftstrom aus einer Kammer ausgetragen wird und infolge der im Wirbelschichtreaktor stets vorhandenen internen Feststoffzirkulation in die andere bzw. anderen Kammer(n) gelangt. Ein rückläufiger oder ausgleichender Materialfluß erfolgt ohne erheblichen Regelaufwand praktisch nicht, da der Durchtritt der Fluidisierungsluft durch die "entleerte" Kammer begünstigt und durch die "gefüllte" Kammer erschwert wird (unterschiedlicher hydrostatischer Druck über den jeweiligen Kammerböden).

Aufgabe der Erfindung ist, eine aus Wirbelschichtreaktor, Feststoffabscheider und Rückführleitung gebildete Wirbelschichtanlage zur Durchführung von exothermen Prozessen in der zirkulierenden Wirbelschicht bereitzustellen, die auch bei hoher Verbrennungsleistung ohne erheblichen Regelaufwand einen einwandfreien und sicheren Betrieb gewährleistet.

Die Aufgabe wird gelöst, indem die eingangs genannte Wirbelschichtanlage derart ausgestaltet wird, daß die verbleibende Bodenfläche des Wirbelschichtreaktors eine einzige zusammenhängende Fläche bildet.

Eine einzige zusammenhängende Fläche wird geschaffen, indem man den oder die Verdrängungskörper derart ausgestaltet, daß einzelne Segmente des Reaktorbodens miteinander in Verbindung stehen. Dies wird beispielsweise dadurch erzielt, daß zwischen Verdrängungskörper und Reaktorwandung gasdurchlässige Bodenfläche erhalten bleibt oder aber - falls der Verdrängungskörper von Wand zu Wand verläuft - durch mindestens einen Durchstich, der nach oben offen oder tunnelartig geformt sein kann, eine Verbindung zwischen einzelnen Bodensegmenten erhalten bleibt. Die Ausgestaltung der Verdrängungskörper in der Weise, daß separate Bodensegmente und damit von einander getrennte Wirbelkammern entstehen, muß unterbleiben. Die durch den oder die Verdrängungskörper geschaffenen Verbindungsflächen bzw. die beim Durchstich entstehenden Basisflächen können ggf. mit geringerer Geschwindigkeit fluidisiert werden als die Hauptflächen des Rostes.

Die geometrische Gestalt des Verdrängungskörpers kann weitgehend beliebig sein. Beispielsweise kann er bei kreisförmigem Querschnitt des Wirbelschichtreaktors die Form eines Zylinders oder Kegelstumpfes besitzen, wobei der Mittelpunkt der unteren Kreisfläche etwa auf dem Mittelpunkt der Bodenfläche ruht. Bei rechteckigem Reaktorquerschnitt kann der Verdrängungskörper die Form eines Dammes besitzen. Es sind auch zwei praktisch rechtwinklig zueinander verlaufende Dämme möglich.

Besonders vorteilhaft ist es jedoch, Verdrängungskörper mit quadratischem oder rechteckigem Querschnitt vorzusehen. Dabei sind gewisse Abweichungen von der exakten geometrischen Figur, beispielsweise durch Abrunden der Ecken, möglich.

Der Verdrängungskörper kann aus im Ofenbau üblichem feuerfestem Material gefertigt werden. Er kann auch aus von Kühlmittel durchflossenen Membran- bzw. Flossenwänden, die zum Schutz auf der in den Reaktorraum weisenden Seite mit Stampfmasse belegt sind, hergestellt sein. Der oder die Verdrängungskörper sind mit dem Reaktor fest verbunden und bilden mit ihm eine bauliche Einheit.

Der Eintrag des zur exothermen Umsetzung befähigten Materials erfolgt über mehrere Eintragsvorrichtungen, so daß einzelne im unteren Reaktorraum gebildete Segmente getrennt beaufschlagt werden.

Gemäß einer bevorzugten Ausgestaltung der Erfindung sind der oder die Verdrängungskörper mit Einrichtungen zum Eintrag von Brennstoff versehen. Sie können sich gegebenenfalls auf mehreren Ebenen befinden. Hierdurch ist eine gute Verteilung des Brennstoffes gewährleistet.

Gemäß einer weiteren bevorzugten Ausgestaltung der Erfindung besitzt die Wirbelschichtanlage einen Verdrängungskörper mit gegebenenfalls in mehreren Ebenen angeordneten Einrichtungen zum Eintrag von sauerstoffhaltigem Sekundärgas. Diese Ausgestaltung der Erfindung schafft die Möglichkeit, die einzelnen Kammern oder Kammerbereiche sowohl durch in der Wandung als auch im Inneren des Wirbelschichtreaktors befindliche Eintragsorgane mit Sekundärgas zu versorgen. Hierdurch ist eine optimale Durchmischung mit Sekundärgas gewährleistet.

Sofern Sekundärgas durch in der Wandung des Wirbelschichtreaktors befindliche Leitungen zugeführt wird, sollte der Kamm des Verdrängungskörpers oberhalb dieser Leitungen liegen. Bei der Zufuhr von Sekundärgas in mehreren übereinander liegenden Ebenen muß sich der Verdrängungskörper mindestens über die Höhe der untersten Zuführleitung erstrecken.

Eine weitere vorteilhafte Ausführungsform der Erfindung sieht Verdrängungskörper vor, deren oder dessen Querschnittsfläche nach oben abnimmt. Hierdurch und in Verbindung mit der vorgenannten Ausführungsform ist erreichbar, daß die Strömungsgeschwindigkeit im den Verdrängungskörper aufweisenden Reaktorbereich trotz Sekundärgaszufuhr nur in gewissen Grenzen schwankt.

Das in der Wirbelschichtanlage angewendete Prinzip der zirkulierenden Wirbelschicht zeichnet sich dadurch aus, daß - im Unterschied zur "klassischen" Wirbelschicht, bei der eine dichte Phase durch einen deutlichen Dichtesprung von dem darüber befindlichen Gasraum getrennt ist - Verteilungszustände ohne definierte Grenzschicht vorliegen. Ein Dichtesprung zwischen dichter Phase und darüber befindlichem Staubraum ist nicht existent; jedoch nimmt innerhalb des Reaktors die Feststoffkonzentration von unten nach oben ständig ab.

Bei der Definition der Betriebsbedingungen über die Kennzahlen von Froude und Archimedes ergeben sich die Bereiche:

3

$$0{,}1 \quad \leq \quad 3/4 \quad \cdot \quad Fr^2 \quad \cdot \quad \frac{\rho_g}{\rho_k - \rho_g} \quad \leq \quad 10,$$

bzw.

$$0{,}01 \quad \leq \quad Ar \quad \leq \quad 100,$$

wobei

$$Ar \quad = \quad \frac{d_k^3 \cdot g \, (\rho_k - \rho_g)}{\rho_g \cdot \nu^2} \quad und$$

$$Fr^2 \quad = \quad \frac{u^2}{g \cdot d_k}$$

sind. Es bedeuten:

u  die relative Gasgeschwindigkeit in m/s
Ar  die Archimedes-Zahl
Fr  Froude-Zahl
$\rho g$  die Dichte des Gases in kg/m$^3$
$\rho k$  die Dichte des Feststoffteilchens in kg/m$^3$
$d_k$  den Durchmesser des kugelförmigen Teilchens in m
$\nu$  die kinematische Zähigkeit in m$^2$/s
g  die Gravitationskonstante in m/s$^2$

Die exotherme Reaktion wird zweistufig mit in unterschiedlicher Höhe zugeführten sauerstoffhaltigen Gasen durchgeführt. Ihr Vorzug liegt in einer "weichen" Umsetzung, bei der lokale Überhitzungserscheinungen vermieden werden und eine NO$_x$-Bildung weitgehend zurückgedrängt wird. Dabei sollte die obere Zufuhrstelle für sauerstoffhaltiges Gas so weit über der unteren liegen, daß der Sauerstoffgehalt des an der unteren Stelle zugeführten Gases bereits weitgehend verzehrt ist.

Ist als Prozeßwärme Dampf erwünscht, besteht eine vorteilhafte Ausführungsform der Erfindung darin, oberhalb der Sekundärgaszuführung eine mittlere Suspensdichte von 15 bis 100 kg/m$^3$ durch Einstellung der Fluidisierungs- und Sekundärgasmengen zu schaffen und die Reaktionswärme durch im freien Raum des Wirbelschichtreaktors oberhalb der Sekundärgaszuführung und/oder an der Wand des Wirbelschichtreaktors angeordnete Heizflächen abzuführen.

Eine derartige Arbeitsweise ist in der DE-AS 25 39 546 bzw. in der entsprechenden US-PS 4 165 717 näher beschrieben.

Die im Wirbelschichtreaktor oberhalb der Sekundärgaszuführung herrschenden Gasgeschwindigkeiten liegen bei Normaldruck im Regelfall über 5 m/s und können bis zu 15 m/s betragen, und das Verhältnis von Durchmesser zu Höhe des Wirbelschichtreaktors sollte derart gewählt werden, daß Gasverweilzeiten von 0,5 bis 8,0 s, vorzugsweise 1 bis 4 s, erhalten werden.

Innerhalb jeder Eintragsebene sind mehrere Zuführungsöffnungen für Sekundärgas vorteilhaft.

Der Vorteil dieser Arbeitsweise besteht insbesondere darin, daß in einfachster Weise eine Veränderung in der Gewinnung der Prozeßwärmemenge durch Veränderung der Suspensionsdichte im oberhalb der Sekundärgaszuführung befindlichen Ofenraum des Wirbelschichtreaktors möglich ist.

Mit einem herrschenden Betriebszustand unter vorgegebenen Fluidisierungsgas- und Sekundärgasvolumina und daraus resultierender bestimmter, mittlerer Suspensionsdichte ist ein bestimmter Wärmeübergang verbunden. Der Wärmeübergang auf die Kühlflächen kann erhöht werden, indem durch Erhöhung der Fluidisierungsgasmenge und gegebenenfalls auch der Sekundärgasmenge die Suspensionsdichte erhöht wird. Mit dem erhöhten Wärmeübergang ist bei praktisch konstanter Verbrennungstemperatur die Möglichkeit zur Abfuhr der bei erhöhter Verbrennungsleistung entstehenden Wärmemengen gegeben. Der aufgrund der höheren Verbrennungsleistung erforderliche erhöhte Sauerstoffbedarf ist hierbei durch die zur Erhöhung der Suspensionsdichte verwendeten höheren Fluidisierungsgas-und gegebenenfalls Sekundärgasmengen quasi automatisch vorhanden.

Analog läßt sich zur Anpassung an einen verringerten Prozeßwärmebedarf die Verbrennungsleistung durch Verringerung der Suspensionsdichte im oberhalb der Sekundärgasleitung befindlichen Ofenraum des Wirbelschichtreaktors regeln. Durch die Erniedrigung der Suspensionsdichte wird auch der Wärmeübergang verringert, so daß aus dem Wirbelschichtreaktor weniger Wärme abgeführt wird. Im wesentlichen ohne Temperaturänderung läßt sich dadurch die Verbrennungsleistung zurücknehmen.

Eine weitere zweckmäßige, universeller anwendbare Ausgestaltung der Erfindung besteht in einer Wirbelschichtanordnung mit mindestens einem über Feststoffzuführ- und Feststoffrückführleitungen angeschlossenen Wirbelschichtkühler. Im Wirbelschichtreaktor wird oberhalb der Sekundärgaszuführung eine mittlere Suspensionsdichte von 10 bis 40 kg/m³ durch geeignete Regelung der Fluidisierungs- und Sekundärgasmengen eingestellt, heißer Feststoff der zirkulierenden Wirbelschicht entnommen, im Wirbelzustand durch direkten und indirekten Wärmeaustausch gekühlt und mindestens ein Teilstrom gekühlten Feststoffes in die zirkulierende Wirbelschicht zurückgeführt.

Diese Ausführungsform ist in der DE-OS 26 24 302 bzw. in der entsprechenden US-PS 4 111 158 näher erläutert.

Hierbei läßt sich die Temperaturkonstanz praktisch ohne Änderung der im Wirbelschichtreaktor herrschenden Betriebszustände, also etwa ohne Veränderung der Suspensionsdichte u.a., allein durch geregelte Abführung heißen Feststoffes und geregelte Rückführung des gekühlten Feststoffes erreichen. Je nach Leistung und eingestellter Reaktionstemperatur ist die Rezirkulationsrate mehr oder minder hoch. Die Temperaturen lassen sich von sehr niedrigen Temperaturen, die nahe oberhalb der Zündgrenze liegen, bis zu sehr hohen Temperaturen, die etwa durch Erweichung der Reaktionsrückstände begrenzt sind, beliebig einstellen. Sie können etwa zwischen 450 und 950°C liegen.

Da hierbei die Entnahme der bei der exothermen Umsetzung gebildeten Wärme überwiegend im feststoffseitig nachgeschalteten Wirbelschichtkühler erfolgt und ein Wärmeübergang auf im Wirbelschichtreaktor befindliche Kühlregister, die eine hinreichend hohe Suspensionsdichte zur Voraussetzung hat, von untergeordneter Bedeutung ist, ergibt sich als weiterer Vorteil dieses Verfahrens, daß die Suspensionsdichte im Bereich des Wirbelschichtreaktors oberhalb der Sekundärgaszuführung niedrig gehalten werden kann und mithin der Druckverlust im gesamten Wirbelschichtreaktor vergleichsweise gering ist. Statt dessen erfolgt der Wärmeentzug im Wirbelschichtkühler unter Bedingungen, die einen extrem hohen Wärmeübergang, etwa im Bereich von 300 bis 500 Watt/m² . °C, bewirken.

Die Temperatur im Wirbelschichtreaktor wird geregelt, indem mindestens ein Teilstrom gekühlten Feststoffes aus dem Wirbelschichtkühler rückgeführt wird. Beispielsweise kann der erforderliche Teilstrom gekühlten Feststoffes direkt in den Wirbelschichtreaktor eingetragen werden. Es kann zusätzlich auch das Abgas durch Eintrag gekühlten Feststoffes, der beispielsweise einer pneumatischen Förderstrecke oder einer Schwebeaustauscherstufe aufgegeben wird, gekühlt werden, wobei der vom Abgas später wieder abgetrennte Feststoff dann in den Wirbelschichtkühler zurückgeleitet wird. Dadurch gelangt auch die Abgaswärme letztlich in den Wirbelschichtkühler. Besonders vorteilhaft ist es, gekühlten Feststoff als einen Teilstrom direkt und als einen weiteren indirekt nach Kühlung der Abgase in den Wirbelschichtreaktor einzutragen.

Auch bei dieser Ausgestaltung der Erfindung sind die Gasverweilzeiten, Gasgeschwindigkeiten oberhalb der Sekundärgasleitung bei Normaldruck und Art der Fluidisierungs- bzw. Sekundärgaszuführung in Übereinstimmung mit den gleichen Parametern der zuvor behandelten Ausführungsform.

Die Rückkühlung des heißen Feststoffes des Wirbelschichtreaktors sollte in einem Wirbelschichtkühler mit mehreren nacheinander durchflossenen Kühlkammern, in die miteinander verbundene Kühlregister eintauchen, im Gegenstrom zum Kühlmittel erfolgen. Hierdurch gelingt es, die Verbrennungswärme an eine vergleichsweise kleine Kühlmittelmenge zu binden.

Eine andere Ausgestaltung der Wirbelschichtanlage mit angeschlossenem Wirbelschichtkühler besteht darin, diesen mit dem Wirbelschichtreaktor zu einer baulichen Einheit zu verbinden. In diesem Fall besitzen der Wirbelschichtreaktor und der Wirbelschichtkühler eine gemeinsame, zweckmäßigerweise gekühlte Wand, die eine Durchtrittsöffnung für gekühlten Feststoff in den Wirbelschichtreaktor aufweist. Hierbei kann der Wirbelschichtkühler - wie vorstehend erörtert - mehrere Kühlkammern besitzen, er kann aber auch aus mehreren mit Kühlflächen ausgestatteten Einheiten bestehen, die jeweils mit dem Wirbelschichtreaktor eine gemeinsame Wand mit Durchtrittsöffnung für Feststoff und eine eigene Feststoffversorgungsleitung aufweisen. Eine derartige Vorrichtung ist in der EP - A - 206 066 beschrieben.

Die Universalität der Ausgestaltung mit Wirbelschichtkühler ist insbesondere dadurch gegeben, daß sich im Wirbelschichtkühler nahezu beliebige Wärmeträgermedien aufheizen lassen. Von besonderer Bedeutung aus technischer Sicht ist die Erzeugung von Dampf unterschiedlichster Form und die Aufheizung von Wärmeträgersalz.

Innerhalb der Erfindung können als sauerstoffhaltige Gase Luft oder mit Sauerstoff angereicherte Luft oder technisch reiner Sauerstoff eingesetzt werden. Schließlich kann eine Leistungssteigerung erzielt werden, wenn die Umsetzung unter Druck, etwa bis 20 bar, durchgeführt wird.

In die erfindungsgemäße Wirbelschichtanlage können prinzipiell alle selbstgängig verbrennbaren Materialien eingesetzt werden. Beispiele sind Kohlen aller Art, insbesondere solche minderer Qualität, wie Kohlewaschberge, Schlammkohle, Kohle mit hohem Salzgehalt, aber auch Braunkohle und Ölschiefer. Sie kann auch der Abröstung sulfidischer Erze oder Erzkonzentrate dienen.

Die Erfindung wird anhand der beigefügten Figuren und des Beispiels beispielsweise und näher erläutert.

Es veranschaulichen:

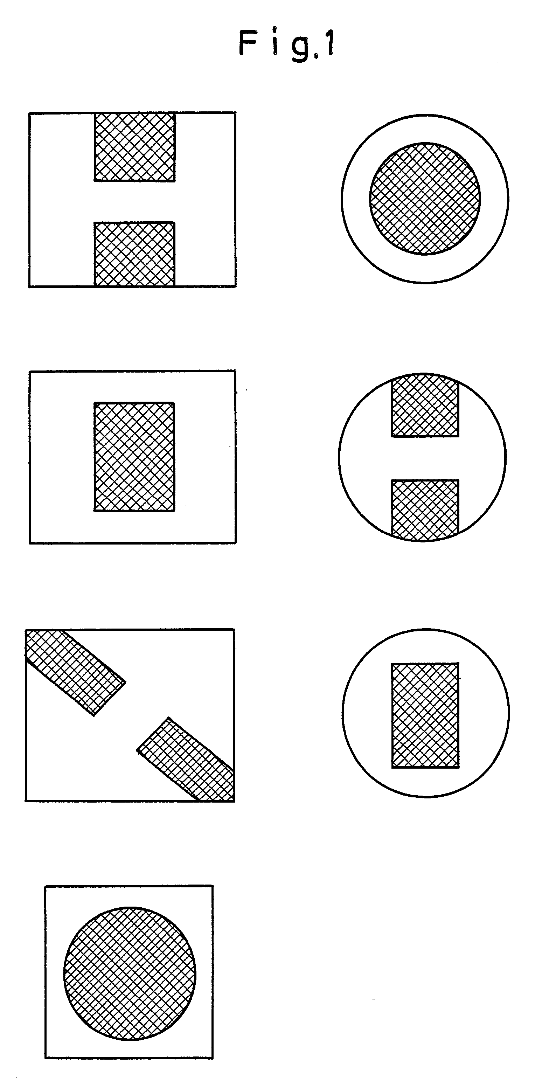

Fig. 1 verschiedene Beispiele für die Ausgestaltung des Verdrängungskörpers bei Wirbelschichtreaktoren mit kreisförmigem oder rechteckigem Querschnitt in Form einer Draufsicht.

Fig. 2 den unteren Bereich des Wirbelschichtreaktors mit Verdrängungskörper in perspektivischer Darstellung.

Fig. 3 einen Längsschnitt durch den Wirbelschichtreaktor.

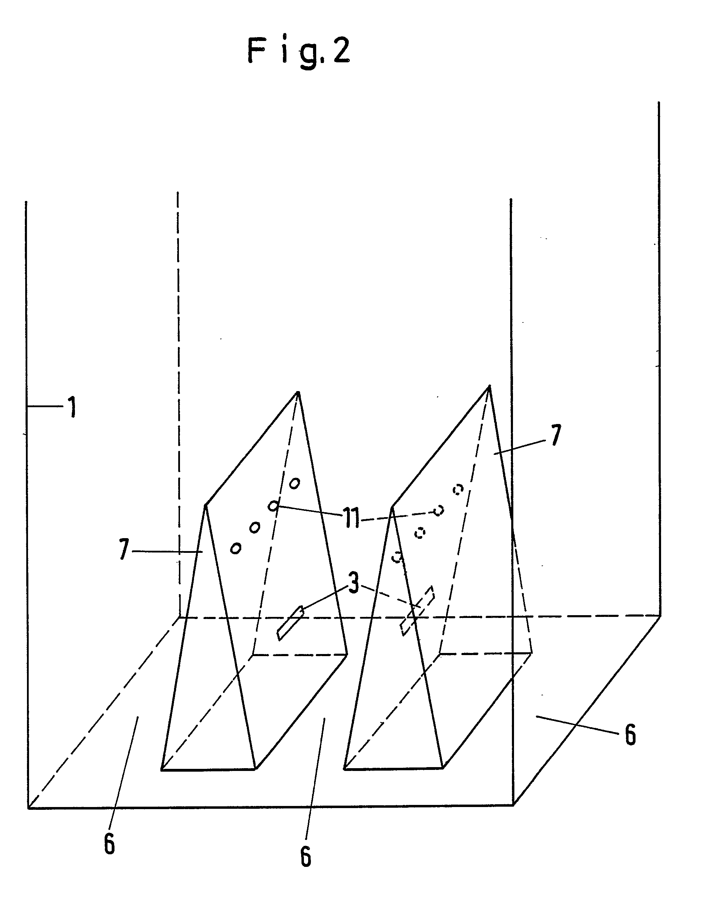

In Fig. 2 ist der Wirbelschichtreaktor schematisch angedeutet und mit 1 bezeichnet. Dessen Bodenfläche ist mit prismatischen Verdrängungskörpern 7 teilweise abgedeckt, so daß mehrere Fluidisierungssegmente 6 gebildet werden. Die Verdrängungskörper 7 besitzen im oberen Bereich Sekundärgasöffnungen 11 und im unteren Bereich Eintragsleitungen 3 für Brennstoff.

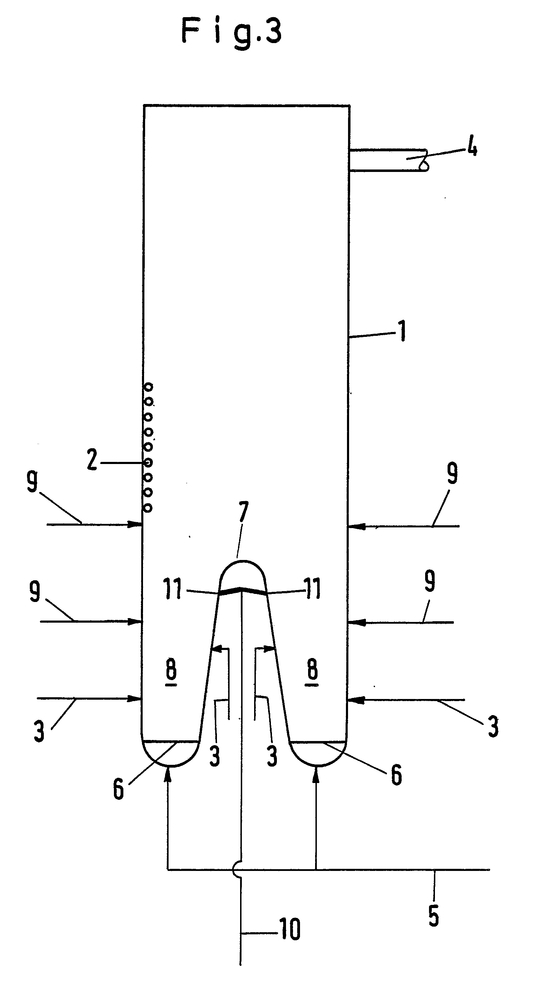

Der Wirbelschichtreaktor 1 gemäß Fig. 3 besitzt Heizflächen 2, die als Membranwand angedeutet sind. Die Versorgung der unteren Reaktorkammer 8, die durch einen dammartigen Verdrängungskörper 7 in vier Segmente (zwei Segmente parallel zum Damm, je ein Segment vor und hinter dem Damm) aufgeteilt ist, erfolgt über Leitung 5 und Fluidisierungsrost 6 mit sauerstoffhaltigem Fluidisierungsgas, über Leitungen 3 mit Brennstoff und über Leitungen 9 mit sauerstoffhaltigem Sekundärgas. Über Leitung 10 und Sekundärgasöffnungen 11 wird zusätzliches Sekundärgas und über weitere Leitungen 3 zusätzlicher Brennstoff aufgegeben. Der Austritt der Gas/Feststoff-Suspension erfolgt über Leitung 4.


Beispiel

Es wurde Kohle mit Luft unter Erzeugung von Sattdampf verbrannt.

Der Wirbelschichtreaktor 1 der Wirbelschichtanlage besaß eine Grundfläche von 12,5 x 10,1 m und eine Höhe von 30,5 m. Seine Bodenfläche war durch einen Verdrängungskörper 7 mit einer Grundfläche von 8,5 x 8,1 m derart abgedeckt, daß vier mit Fluidisierungsrosten 6 versehene Segmente resultierten. Zwei mit einer Breite von jeweils 2 m verliefen parallel zur längeren Reaktorwand, zwei mit einer Breite von jeweils 1 m lagen zwischen den Enden des Verdrängungskörpers 7 und der Reaktorwand. Der Verdrängungskörper 7 besaß die Form eines Prismas, dessen Höhe 6,8 m betrug.

Die Wandfläche des Wirbelschichtreaktors 1 war vollständig mit wassergekühlten Membranwänden ausgekleidet. Auch die Wände des Verdrängungskörpers 7 waren als wassergekühlte Membranwände ausgestaltet, die reaktorseitig mittels Feuerfestmaterial geschützt waren.

In den Wirbelschichtreaktor 1 wurden insgesamt 110,4 t/h Kohle mit einem Heizwert von $H_u$ = 15,9 MJ/kg und einem mittleren Korndurchmesser von 0,2 mm sowie 10,4 t/h Kalkstein etwa gleicher Korngröße mit Hilfe von 11 040 Nm³/h Luft von 100° C über insgesamt sechs Leitungen 3 eingetragen. Als Fluidisierungsgas diente Luft von 260° C, die in einer Menge von 280 000 Nm³/h durch die Fluidisierungsroste 6 zugeführt wurde. Über die Sekundärgasleitungen 9 und 11 erfolgte eine weitere Zuführung von Luft von 260° C in einer Menge von insgesamt 206 000 Nm³/h. Sie erfolgte in drei Ebenen bei 2 m (51 500 Nm³/h) bei 4,6 m (51 500 Nm³/h) und bei 7,3 m (103 000 Nm³/h) über dem Fluidisierungsrost 6.

Aufgrund der gewählten Betriebsbedingungen herrschte im Wirbelschichtreaktor 1 eine Temperatur von 850° C. Über die Heizflächen 2 und die Membranwände des Verdrängungskörpers 7 wurde Sattdampf von 140 bar entsprechend einer thermischen Leistung von 102 MW erzeugt.


**Ansprüche**

1. Aus Wirbelschichtreaktor, Feststoffabscheider und Rückführleitung gebildete Wirbelschichtanlage zur Durchführung von exothermen Prozessen in der zirkulierenden Wirbelschicht mit Leitungen zur Zufuhr sauerstoffhaltiger Primärgase durch den Boden des Wirbelschichtreaktors und Leitungen zur Zufuhr sauerstoffhaltiger Sekundärgase in einer Höhe von mindestens 1 m über dem Reaktorboden, jedoch maximal 30 % der Reaktorhöhe, sowie einer zwischen Primär- und Sekundärgaszuführung in den Wirbelschichtreaktor mündenden Brennstoffleitung, wobei durch einen oder mehrere Verdrängungskörper , dessen (deren) maximale Höhe gleich der halben Höhe des Wirbelschichtreaktors ist, 40 bis 75 % der Bodenfläche des Wirbelschichtreaktors abgedeckt sind, dadurch gekennzeichnet, daß die verbleibende Bodenfläche (6) des Wirbelschichtreaktors (1) eine einzige zusammenhängende Fläche bildet.

2. Wirbelschichtreaktor nach Anspruch 1, gekennzeichnet durch einen oder mehrere Verdrängungskörper (7) mit quadratischem oder rechteckigem Querschnitt.

3. Wirbelschichtanlage nach Anspruch 1 oder 2, gekennzeichnet durch einen oder mehrere Verdrängungskörper (7) mit Einrichtungen zum Eintrag von Brennstoff (3), die ggf. in mehreren Ebenen angeordnet sind.

4. Wirbelschichtanlage nach Anspruch 1, 2 oder 3, gekennzeichnet durch einen oder mehrere Verdrängungskörper (7) mit Einrichtungen (11) zum Eintrag von sauerstoffhaltigen Sekundärgasen, die gegebenenfalls in mehreren Ebenen angeordnet sind.

5. Wirbelschichtanlage nach Anspruch 1, 2, 3 oder 4, gekennzeichnet durch einen oder mehrere Verdrängungskörper (7), dessen oder deren Querschnittsfläche nach oben abnimmt.

6. Wirbelschichtanlage nach einem oder mehreren der Ansprüche 1 bis 5, gekennzeichnet durch im freien Raum des Wirbelschichtreaktors (1) oberhalb der obersten Sekundärgaszuführung (9) und/oder an der Wand des Wirbelschichtreaktors (1) angeordnete Heizflächen (2).

7. Wirbelschichtanlage nach einem oder mehreren der Ansprüche 1 bis 6, gekennzeichnet durch mindestens einen über Feststoffzuführ- und Feststoffrückführleitungen angeschlossenen Wirbelschichtkühler.

# Fig.1

# Fig.2

# Fig.3